# EUROPÄISCHE PATENTSCHRIFT

(11) **EP 0 705 741 B1**
(45) Veröffentlichungstag und Bekanntmachung des Hinweises auf die Patenterteilung: **08.07.1998**
(21) Anmeldenummer: 95115702.3
(22) Anmeldetag: 05.10.1995
(51) Int. Cl.: B60R 22/20

(54) **Verstellvorrichtung für einen Umlenkbeschlag**
Adjusting apparatus for a pillar loop
Dispositif de réglage d'un renvoi de sangle

(30) Priorität: 07.10.1994 DE 4435910
(43) Veröffentlichungstag der Anmeldung: 10.04.1996
(73) Patentinhaber: TRW Occupant Restraint Systems GmbH & Co. KG, 73551 Alfdorf (DE)
(72) Erfinder: Gölz, Ulrich, D-73579 Schechingen (DE); Maier, Tanja, D-73575 Leinzell (DE); Bühr, Erwin, D-73527 Schwäbisch Gmünd (DE)
(74) Vertreter: Degwert, Hartmut, Dipl.-Phys.

(56) Entgegenhaltungen:
- EP-A- 0 277 550
- DE-A- 4 101 008

## Beschreibung

Die Erfindung betrifft eine Verstellvorrichtung für einen Umlenkbeschlag eines Sicherheitsgurtsystems in Fahrzeugen mit wenigstens einem in Fahrzeuglängsrichtung verstellbaren Sitz, der durch ein erstes Zugseil mit dem Umfang einer ersten Rolle gekoppelt ist, während der Umlenkbeschlag durch ein zweites Zugseil mit dem Umfang einer zweiten Rolle gekoppelt ist, wobei die zweite Rolle mit der ersten drehbar ist und einen kleineren Durchmesser als diese aufweist.

Eine Verstellvorrichtung dieser Art ist aus der EP 0 277 550 B1 bekannt und dient dem Zweck, die Höhe des Umlenkbeschlages synchron mit der Längsverstellung des Fahrzeugsitzes anzupassen. Die Sitzverstellung soll aus offensichtlichen Sicherheitsgründen bei stehendem Fahrzeug vorgenommen werden. Erfolgt sie dennoch bei fahrendem Fahrzeug, so können am Fahrzeugsitz starke Beschleunigungen auftreten, wenn das Fahrzeug zugleich heftig abgebremst wird und der Fahrzeugsitz in einer Rastung plötzlich arretiert wird. Bei diesem Vorgang kann sich das am Fahrzeugsitz angeschlossene Zugseil lösen. Wenn überdies der Umlenkbeschlag blockiert wird, tritt eine Überlastung des Zugseils auf, was zu dessen Abriß führen kann. In beiden Fällen ist eine Reparatur in der Fachwerkstatt erforderlich.

Durch die Erfindung wird die Verstellvorrichtung dahingehend verbessert, daß ein Lösen des Zugseils vom Fahrzeugsitz sowie eine Überlastung des Zugseils unter allen Umständen vermieden werden. Gemäß der Erfindung ist die erste Rolle mit der zweiten Rolle durch eine Federeinrichtung gekoppelt, die bei Überschreitung eines bestimmten Drehmoments zwischen den Rollen nachgibt und eine Relativdrehung der Rollen zuläßt. Zwischen den beiden Rollen findet somit eine Drehmomentbegrenzung statt, durch die plötzliche Zuglastspitzen von den Zugseilen ferngehalten werden. Es kann daher auch in Extremsituationen zu keiner Überlastung oder gar Beschädigung von Komponenten des Systems kommen, und auch ein Aushängen des Zugseils am Fahrzeugsitz wird vermieden. Durch die Dimensionierung der von der Federeinrichtung bereitgestellten Federkraft wird das Drehmoment bestimmt, ab dem die Drehmomentbegrenzung einsetzt.

Bei der bevorzugten Ausführungsform weisen die Rollen zwei durch die Federeinrichtung gegeneinander verspannte Anschläge auf, und vorzugsweise wirkt ein erster Anschlag an der ersten Rolle mit einem zweiten Anschlag an einer drehbaren Anschlagscheibe und ein dritter Anschlag an der zweiten Rolle mit einem vierten Anschlag an der Anschlagscheibe zusammen. Somit stehen nahezu zwei vollständige Umdrehungen der größeren, ersten Rolle für die Drehmomentbegrenzung zur Verfügung, so daß diese über den gesamten Verstellhub des Fahrzeugsitzes gewährleistet ist.

Ferner ist bei der bevorzugten Ausführungsform die Federeinrichtung eine Spiralfeder, deren äußeres Ende mit der ersten Rolle und deren inneres Ende mit der zweiten Rolle gekoppelt ist; die Spiralfeder ist in einem Federgehäuse aufgenommen, an dem das äußere Ende der Spiralfeder angeschlossen ist und das durch eine Keilverzahnung verstellbar mit der ersten Rolle gekoppelt ist. Die Einstellung der Federkraft auf den gewünschten Wert kann nun durch einfaches Verdrehen des Federgehäuses relativ zu der ersten Rolle erfolgen.

Eine konstruktiv einfache und mit geringem Aufwand zu realisierende Bauform ergibt sich schließlich dadurch, daß die zweite Rolle einen axialen Lagerzapfen aufweist, mit dem einerseits die zweite Rolle in einem die erste Rolle umgebenden Gehäuse gelagert ist und auf dem andererseits die zweite Rolle drehbar gelagert ist, besonders, wenn auf dem Lagerzapfen auch die Anschlagscheibe drehbar gelagert ist.

Weitere Merkmale und Vorteile der Erfindung ergeben sich aus der folgenden Beschreibung einer bevorzugten Ausführungsform und aus der Zeichnung, auf die Bezug genommen wird. In der Zeichnung zeigen:
- Fig. 1: schematisch in Seitenansicht einen längsverstellbaren Fahrzeugsitz mit höhenverstellbarem Umlenkbeschlag und einer Verstellvorrichtung für diesen;
- Fig. 2: einen radialen Teilschnitt einer Untersetzungseinrichtung mit Drehmomentbegrenzung;
- Fig. 3: einen Schnitt entlang Linie III-III in Fig. 2;
- Fig. 4: einen Schnitt entlang Linie IV-IV in Fig. 3;
- Fig. 5: einen Schnitt entlang Linie V-V in Fig. 3 im Normalzustand; und
- Fig. 6: einen Schnitt entlang Linie V-V in Fig. 3 im überlasteten Zustand.

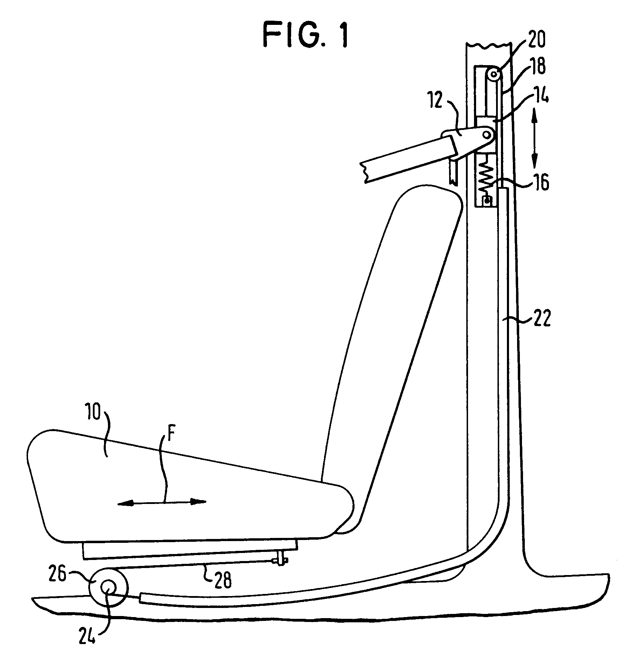

Die vorderen Sitze in einem Kraftfahrzeug sind gewöhnlich in Längsrichtung des Fahrzeugs verstellbar. Der in Fig. 1 gezeigte Fahrzeugsitz 10 ist in Richtung eines Doppelpfeiles F verstellbar. Zugleich wird ein Umlenkbeschlag 12 eines Dreipunkt-Sicherheitsgurtes in der Höhe verstellt. Der Umlenkbeschlag 12 ist an einem Schieber 14 verankert, der am B-Pfosten des Fahrzeugs annähernd senkrecht verschiebbar geführt ist. Der Schieber 14 wird durch eine Zugfeder 16 zum Fahrzeugboden hin belastet und kann fahrzeugsensitiv in seiner jeweiligen Stellung verrastet werden.

Zur Verstellung der Höhe des Umlenkbeschlages 12 ist am Schieber 14 ein Zugseil 18 angeschlossen, das über eine Umlenkrolle 20 geführt ist. Durch einen Außenmantel 22 wird das Zugseil 18 zum Umfang einer Rolle 24 geführt, die mit einer im Durchmesser größeren Rolle 26 gekoppelt ist. Ein weiteres Zugseil 28 ist an der Unterseite des Fahrzeugsitzes 10 angeschlossen und zum Außenumfang der Rolle 26 geführt. Die Rollen 24 und 26 bilden eine Untersetzungseinrichtung, die den Verstellweg des Fahrzeugsitzes 10 in einen reduzierten Vertikalhub des Umlenkbeschlages 12 umsetzt.

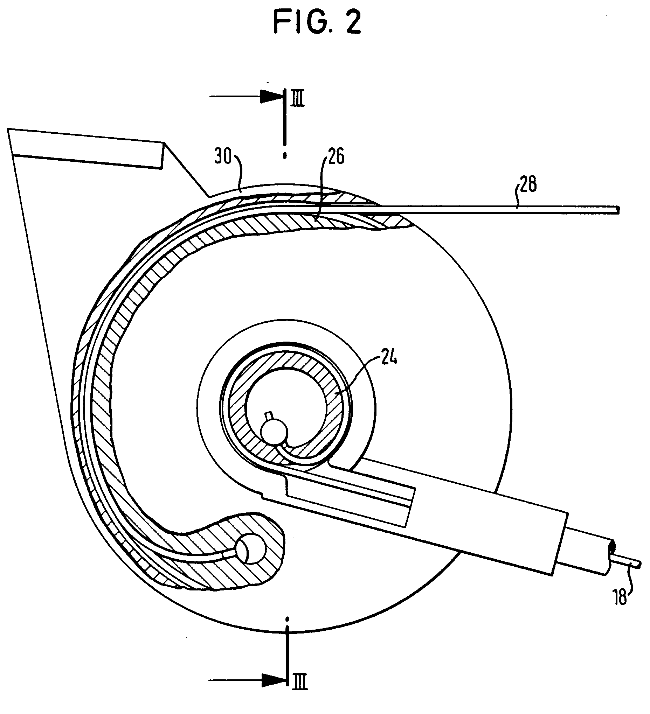

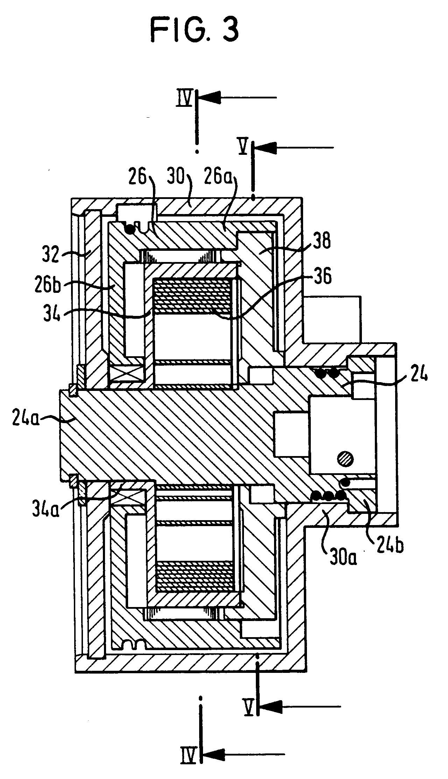

Die Befestigung der Zugseile 18, 28 am Außenumfang der Rollen 24, 26 ist in Fig. 2 dargestellt. Die Rollen 24, 26 sind, wie in Fig. 3 gezeigt, in einem weitgehend zylindrischen Gehäuse 30 aufgenommen, dessen offene Seite mit einem Deckel 32 verschlossen ist. Die Rolle 24 ist mit einem axialen Lagerzapfen 24a versehen, der in einer Öffnung des Deckels 32 drehbar gelagert ist, und weist an ihrem entgegengesetzten Ende einen im Durchmesser vergrößerten Bund 24b zur Lagerung und axialen Festlegung an einem rohrförmigen seitlichen Fortsatz 30a des Gehäuses 30 auf.

Auf dem Lagerzapfen 24a ist ein glockenförmiges Federgehäuse 34 drehbar gelagert. In dem Federgehäuse 34 ist eine Spiralfeder 36 aufgenommen, deren inneres Ende an der Rolle 24 und deren äußeres Ende an dem Federgehäuse 34 angeschlossen ist.

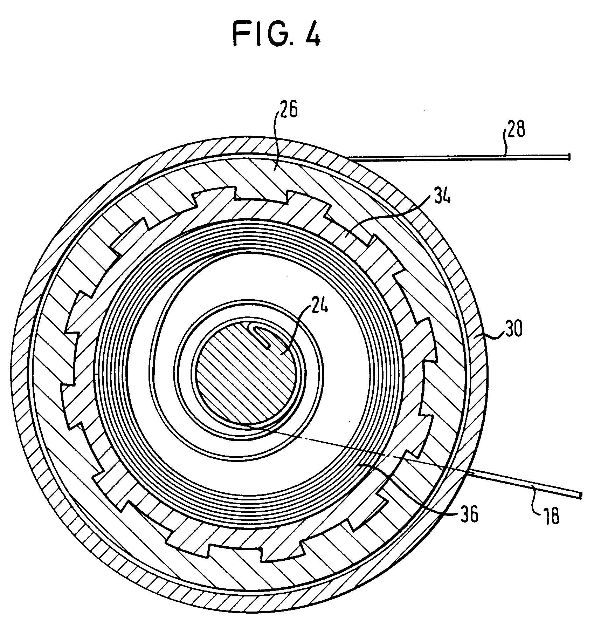

Die Rolle 26 ist hohl mit einem radialen Lagerflansch 26a zur drehbaren Lagerung auf einem zylindrischen Lageransatz 34a des Federgehäuses und mit einem zylindrischen Mantel 26a ausgebildet, der das Federgehäuse 34 umgibt. Wie aus Fig. 4 ersichtlich ist, weist der Mantel 26a innenseitig eine Keilverzahnung auf, die zur formschlüssigen Aufnahme einer entsprechenden äußeren Keilverzahnung des Federgehäuses 34 bestimmt ist.

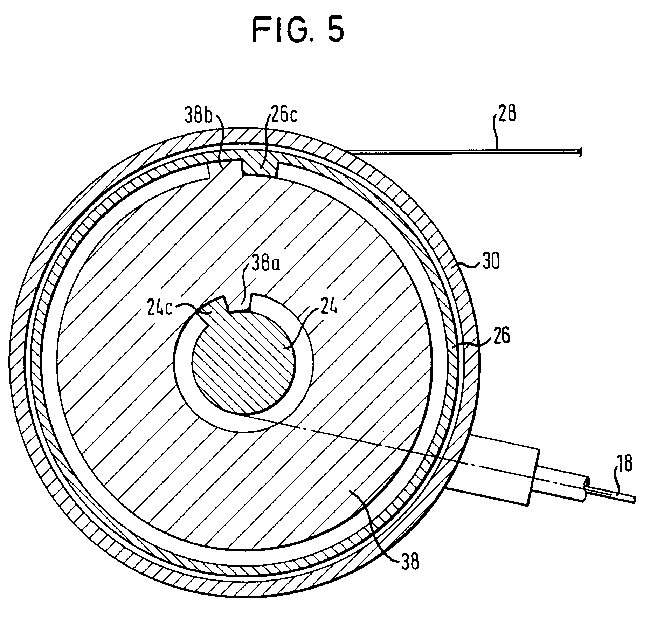

Auf dem Lagerzapfen 24a ist ferner eine Anschlagscheibe 38 frei drehbar gelagert. Wie aus Fig. 5 ersichlich ist, weist diese Anschlagscheibe 38 einen radial inneren Anschlagnocken 38a, an dem bei der gezeigten Normalstellung ein entsprechender Anschlag 24c der Rolle 24 anliegt, und einen radial äußeren Anschlagnocken 38b auf, an dem ein entsprechender Anschlag 26c der Rolle 26 anliegt.

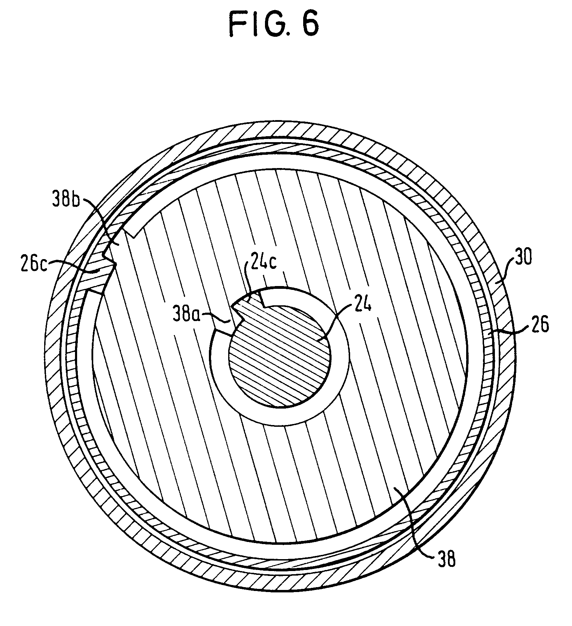

Die Anschlagnocken 38a und 38b werden durch die Federkraft der Spiralfeder 36 in Anlage an den Anschlägen 24c und 26c gehalten, so daß die Rollen 24, 26 letztlich durch die Spiralfeder 36 gegeneinander verspannt und bis zu einem bestimmten Drehmoment drehfest miteinander gekoppelt sind. Wird dieses Drehmoment, das durch die relative Drehstellung des Federgehäuses 34 zur Rolle 26 eingestellt werden kann, aufgrund einer übermäßigen Zugspannung zwischen den Zugseilen 18, 28 überschritten, so gibt die Spiralfeder 36 nach, und die Rollen 24, 26 werden gegeneinander verdreht, wobei sich ihre Anschläge 24c und 26c von den Anschlagnocken 38a, 38b lösen. Die Rollen 24, 26 können maximal um annähernd zwei Umdrehungen gegeneinander verdreht werden, bis die Anschläge 24c, 26c erneut gegen die Anschlagnocken 38a, 38b stoßen, wie in Fig. 6 gezeigt. Der Außendurchmesser der Rolle 26 ist so bemessen, daß bei der Verstellung des Fahrzeugsitzes 10 über seinen gesamten Verstellweg weniger als zwei Umdrehungen erforderlich sind, um die entsprechende Länge des Zugseils 28 aufzurollen.

Wenn nun bei einer abrupten Sitzverstellung oder einer Blockierung des Umlenkbeschlages 12 eine abnorme Zugspannung in den Zugseilen 18, 28 auftritt, so werden lediglich die Rollen 24, 26 gegeneinander verdreht, so daß eine Überlastung aller Komponenten der Verstellvorrichtung sicher Verhindert wird.

## Patentansprüche

1. Verstellvorrichtung für einen Umlenkbeschlag eines Sicherheitsgurtsystems in Fahrzeugen mit wenigstens einem in Fahrzeuglängsrichtung verstellbaren Sitz (10), der durch ein erstes Zugseil (28) mit dem Umfang einer ersten Rolle (26) gekoppelt ist, während der Umlenkbeschlag (12) durch ein zweites Zugseil (18) mit dem Umfang einer zweiten Rolle (24) gekoppelt ist, wobei die zweite Rolle (24) mit der ersten drehbar ist und einen kleineren Durchmesser als diese aufweist, dadurch gekennzeichnet, daß die erste Rolle (26) mit der zweiten Rolle (24) durch eine Federeinrichtung (36) gekoppelt ist, die bei Überschreitung eines bestimmten Drehmoments zwischen den Rollen (24, 26) nachgibt und eine Relativdrehung der Rollen zuläßt.

2. Verstellvorrichtung nach Anspruch 1, dadurch gekennzeichnet, daß die Rollen (24, 26) zwei durch die Federeinrichtung (36) gegeneinander verspannte Anschläge (24c, 26c) aufweisen.

3. Verstellvorrichtung nach Anspruch 2, dadurch gekennzeichnet, daß ein erster Anschlag (26c) an der ersten Rolle (26) mit einem zweiten Anschlag (38b) an einer drehbaren Anschlagscheibe (38) und ein dritter Anschlag (24c) an der zweiten (24) Rolle mit einem vierten Anschlag (38a) an der Anschlagscheibe (38) zusammenwirkt.

4. Verstellvorrichtung nach einem der vorstehenden Ansprüche, dadurch gekennzeichnet, daß die Federeinrichtung (36) eine Spiralfeder ist, deren äußeres Ende mit der ersten Rolle (26) und deren inneres Ende mit der zweiten Rolle (24) gekoppelt ist.

5. Verstellvorrichtung nach Anspruch 4, dadurch gekennzeichnet, daß die Spiralfeder (36) in einem Federgehäuse (34) aufgenommen ist, an dem das äußere Ende der Spiralfeder (36) angeschlossen ist und das durch eine Keilverzahnung verstellbar mit der ersten Rolle (26) gekoppelt ist.

6. Verstellvorrichtung nach einem der vorstehenden Ansprüche, dadurch gekennzeichnet, daß die zweite Rolle (24) einen axialen Lagerzapfen (24a) aufweist, mit dem einerseits die zweite Rolle (24) in einem die erste Rolle (26) umgebenden Gehäuse (30) gelagert ist und auf dem andererseits die zweite Rolle (24) drehbar gelagert ist.

7. Verstellvorrichtung nach den Ansprüchen 3 und 6, dadurch gekennzeichnet, daß auf dem Lagerzapfen (24a) auch die Anschlagscheibe (38) drehbar gelagert ist.

## Claims

1. An adjuster device for a deflector fitting of a vehicular seat belt system having at least one seat (10) adjustable in the longitudinal direction of the vehicle, which is coupled by a first traction cable (28) to the circumference of a first pulley (26), whilst the deflector fitting (12) is coupled by a second traction cable (18) to the circumference of a second pulley (24), said second pulley (24) being rotatable with said first pulley and having a smaller diameter than the latter, characterized in that said first pulley (26) is coupled to said second pulley (24) by a spring means (36) which yields when a determined torque between the pulleys (24, 26) is exceeded and permits relative rotation of the pulleys.

2. The adjuster device as set forth in claim 1, characterized in that said pulleys (24, 26) are provided with stops (24c, 26c) tensioned one against the other by said spring means (36).

3. The adjuster device as set forth in claim 2, characterized in that coaction is provided between a first stop (26c) on said first pulley (26) with a second stop (38b) on a rotatable stop disc (38) and a third stop (24c) on said second pulley (24) with a fourth stop (38a) on said stop disc (38).

4. The adjuster device as set forth in any of the preceding claims, characterized in that said spring means (36) is a spiral spring, the outer end of which is coupled to said first pulley (26) and the inner end of which is coupled to said second pulley (24).

5. The adjuster device as set forth in claim 4, characterized in that said spiral spring (36) is accommodated in a spring housing (34) to which the outer end of said spiral spring (36) is connected and which is adjustably coupled to said first pulley (26) by spline toothing.

6. The adjuster device as set forth in any of the preceding claims, characterized in that said second pulley (24) has an axial journal (24a) on which, on the one hand, said second pulley (24) is mounted in a housing (30) surrounding said first pulley (26) and on which, on the other hand, said second pulley (24) is rotatably mounted.

7. The adjuster device as set forth in claims 3 and 6, characterized in that said stop disc (38) is also rotatably mounted on said journal (24a).

## Revendications

1. Dispositif de réglage pour une armature de renvoi d'un système de ceinture de sécurité pour véhicules avec au moins un siège (10) que l'on peut déplacer dans le sens de la longueur du véhicule, siège qui est accouplé par un premier câble de traction (28) au pourtour d'une première roue (26), tandis que l'armature de renvoi (12) est accouplée par un second câble de traction (18) au pourtour d'une seconde roue (24), la seconde roue (24) pouvant tourner avec la première roue et présentant un diamètre plus petit que celle-ci, dispositif de réglage caractérisé en ce que la première roue (26) est accouplée avec la seconde roue (24) par un système élastique (36) qui, lors du dépassement d'un couple de rotation déterminé entre les roues (24, 26), se relâche et permet d'avoir une rotation relative des roues l'une par rapport à l'autre.

2. Dispositif de réglage selon la revendication 1, caractérisé en ce que les roues (24, 26) présentent deux butées (24c, 26c) qui sont serrées l'une contre l'autre par le système élastique (36).

3. Dispositif de réglage selon la revendication 2, caractérisé en ce qu'une première butée (26c) sur la première roue (26) coopère avec une seconde butée (38b) sur un disque de butée (38) qui peut tourner et une troisième butée (24c) sur la seconde roue (24) coopère avec une quatrième butée (38a) sur le disque de butée (38).

4. Dispositif de réglage selon l'une des revendications précédentes, caractérisé en ce que le système élastique (36) est un ressort spiral, dont l'extrémité extérieure est couplée avec la première roue (26) et dont l'extrémité intérieure est couplée avec la seconde roue (24).

5. Dispositif de réglage selon la revendication 4, caractérisé en ce que le ressort spiral (36) est logé dans un boîtier de ressort (34), auquel l'extrémité extérieure du ressort spiral (36) est raccordée et qui est couplé avec la première roue (26) par un endentement claveté .

6. Dispositif de réglage selon l'une des revendications précédentes, caractérisé en ce que la seconde roue (24) présente un tourillon axial (24a) sur lequel est monté d'une part la seconde roue (24) dans un boîtier (30), qui entoure la première roue (26), et sur lequel est monté d'autre part, de façon à pouvoir tourner, la seconde roue (24).

7. Dispositif de réglage selon les revendications 3 et 6, caractérisé en ce que l'on monte aussi, sur le tourillon (24a), de façon à pouvoir tourner, le disque de butée (38).
